# EUROPEAN PATENT APPLICATION

(11) **EP 1 890 254 A1**
(43) Date of publication of application: **20.02.2008**
(21) Application number: 06118175.6
(22) Date of filing: 31.07.2006
(51) Int. Cl.: G06Q 10/00

(54) **System and method for storage and display of time-dependent events**

(71) Applicant: Research In Motion Limited, Waterloo, Ontario N2L 3W8 (CA)
(72) Inventor: May, Darrell Reginald, Waterloo Ontario N2V 2K6 (CA); Bredin, Robert, Guelph Ontario N1G 4R8 (CA); Zinn, Scotte, Waterloo, Ontario N2L 5T9 (CA)
(74) Representative: Rickard, David John

(57) **Abstract**

A method of storage of time-dependent events at an electronic device includes maintaining a plurality of calendar databases for saving data relating to respective calendar services, receiving time-dependent event data associated with one of the calendar services; and
storing the time-dependent event data in one of the calendar databases for storage of data associated with the one of the calendar services.

## Description

The present application relates generally to electronic devices with calendar applications for storage and display of time-dependent events such as appointments and meetings in a graphical user interface.

Many electronic devices such as desktop computers or mobile stations including simple cellular telephones, smart telephones, wireless personal digital assistants (PDAs), and laptop computers with wireless 802.11 or Bluetooth capabilities, include calendar or date-book applications for scheduling and reviewing time-dependent events such as appointments and meetings in a graphical user interface. The information relating to time-dependent events such as time, place and duration is saved as a time-dependent event and is viewable in the graphical user interface in various layouts such as a day view, a week view or a month view. Such applications are useful for maintaining a list of time-dependent events for a user, and audible or visible alerts are commonly employed for notifying or reminding the user of any or all of the events.

With many portable electronic devices such as cellular telephones, smart telephones, and wireless PDAs, time-dependent events can be created and saved using the calendar application of the portable electronic device. Time-dependent events can also be created and saved on another electronic device such as a desktop or laptop computer, using a calendar service application on the desktop computer. These time-dependent events can be synchronized or transferred to the portable electronic device by wired or wireless connection. Thus, the time-dependent events are stored at both the desktop computer and at the portable electronic device such that the time-dependent events at the electronic device mirror those at the desktop computer. This permits convenient viewing of the events using the calendar application at either the device or the desktop computer.

In some cases, users choose to keep different time-dependent events in different calendar applications depending on the nature of the event. For example a user may choose to store all business-related time-dependent events using a calendar application on the desktop computer while all personal-related time-dependent events are stored in an alternate calendar application, for example using an online calendar service such as those offered by Google^{™} or Yahoo!^{™}. Some of these online calendar services permit the user to transfer time-dependent events from the online calendar service to the portable electronic device and vice versa. Other calendar services may also be used. Unfortunately, when time-dependent events are transferred from any of these services to the portable electronic device, any time-dependent events already existing on the device can be deleted or the events from any one of these services are merged with any time-dependent events already existing on the portable electronic device. In the example above of a user with separate business and personal calendars, the business calendar can be lost or the data is merged with the data from the personal calendar. In the latter case, the two sets of events are displayed and are indistinguishable in a single calendar view on the portable electronic device. Later synchronization with the desktop computer results in transfer of all personal time-dependent events (originating from the online calendar service) to the desktop computer, thereby merging both personal and business related time-dependent events.

It would be advantageous to display time-dependent events from different calendar services in a graphical user interface of a calendar application on a portable electronic device without merging or deleting events during synchronization.

### GENERAL

According to an aspect of an embodiment there is preferably provided a method of storage of time-dependent events at an electronic device includes maintaining a plurality of calendar databases for saving data relating to respective calendar services, receiving time-dependent event data associated with one of the calendar services; and storing the time-dependent event data in one of the calendar databases for storage of data associated with the one of the calendar service.

According to another aspect of an embodiment there is preferably provided a computer program product for managing time-dependent events at an electronic device, the computer program product preferably including a computer-readable medium having computer readable code embodied therein for implementing in the electronic device, the above method.

According to another aspect of an embodiment there is preferably provided an electronic device including a memory for storage of a plurality of calendar databases associated with respective calendar services, a display device for displaying a calendar display view, a user input device for receiving user input, a communications device and antenna for receiving time-dependent event data associated with one of the calendar services, and a processor connected to the memory, the user input device, the display device, and the communications device, for storing the time-dependent event data in one of the calendar databases associated with the one of the calendar services.

Advantageously, time-dependent events from different calendar services can be selectively displayed in a graphical user interface of a calendar application at the portable electronic device. The time-dependent events from each different service may be stored in separate databases associated with the calendar service to which the events belong, to thereby keep these events separated. Therefore the time-dependent events from all calendar services for a given time period can be viewed in a single display screen without merging the events in a single database. Thus, time-dependent events from one calendar service may be transferred only to the corresponding database at the portable electronic device. If the calendar service allows it, time-dependent events from a database at the portable electronic device may be transferred to only the corresponding calendar service.

### BRIEF DESCRIPTION OF THE DRAWINGS

The system and method for storage and display of time-dependent events will be better understood with reference to the following description and to the Figures, in which:

Figure 1 is a representation of a portable electronic device for storage and display of time-dependent events in accordance with one embodiment;

Figure 2 is a block diagram of certain internal components within the portable electronic device of Figure 1;

Figure 3 is a schematic illustration of the relationship between certain functional components of the portable electronic device including a calendar service manager and calendar applications;

Figure 4A is a flowchart illustrating steps carried out at the portable electronic device during creation and management of a database for time-dependent events from a calendar service;

Figure 4B is a flowchart illustrating steps carried out at the portable electronic device during the addition of a new time-dependent event to one of the databases;

Figure 5 is a schematic illustration of the relationship between a calendar viewing application and an appointment scheduling application;

Figure 6 is a flowchart illustrating steps carried out at the portable electronic device during displaying of a calendar view according to one aspect; and

Figures 7 to 11 show exemplary screens of an LCD display of the electronic device of Figure 1.

### DESCRIPTION OF PREFERRED EMBODIMENTS

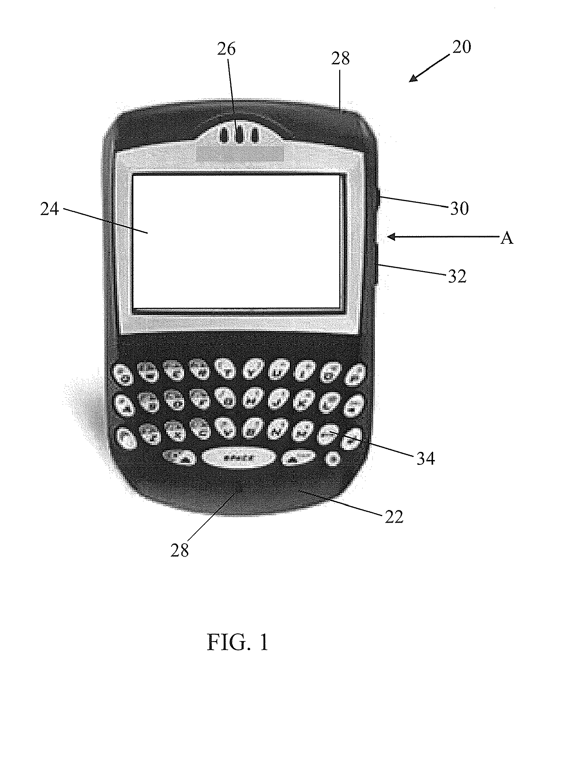

Referring to Figure 1, a portable electronic device for storage and display of time-dependent events in accordance with an embodiment is indicated generally by the numeral 20. In the present embodiment, the portable electronic device 20 is based on the computing environment and functionality of a hand-held wireless communication device. It will be understood, however, that the portable electronic device 20 is not limited to a hand-held wireless communication device. Other portable electronic devices are possible, such as cellular telephones, smart telephones, and laptop computers. Referring again to the present embodiment, the portable electronic device 20 includes a housing 22 that frames an LCD display 24, a speaker 26, an LED indicator 28, a trackwheel 30, an exit key 32, a key pad 34, and a microphone 36. The trackwheel 30 and the exit key 32 can be inwardly depressed along the path of arrow "A" as a means to provide additional user-input. The housing 22 is made from a suitable material as will occur to those skilled in the art, and can be stored, for example, in a holster (not shown) that includes an attachment for attaching to a user's belt.

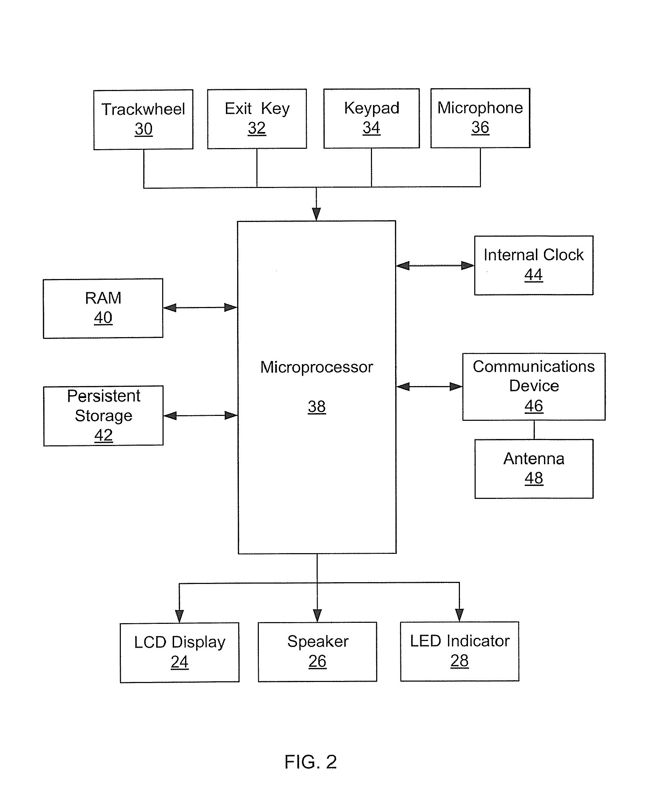

Referring now to Figure 2, a block diagram of certain internal components, including internal components within the portable electronic device 20, is shown. The portable electronic device 20 is based on a microcomputer that includes a microprocessor 38 connected to a random access memory unit (RAM) 40 and a persistent storage device 42 that is responsible for various non-volatile storage functions of the portable electronic device 20. Operating system software executable by the microprocessor 38 is stored in the persistent storage device 42, which in the present embodiment is flash memory. It will be appreciated, however, that the operating system software can be stored in other types of memory such as read only memory (ROM). The microprocessor 38 receives input from various input devices including the trackwheel 30, the exit key 32, and the keypad 34, and outputs to various output devices including the LCD display 24, the speaker 26 and the LED indicator 28. The microprocessor 38 is also connected to an internal clock 44.

In the present embodiment, the portable electronic device 20 is a two-way RF communication device having voice and data communication capabilities. The portable electronic device 20 also includes internet communication capabilities. Two-way RF communication is facilitated by a communications device 46 that is used to connect to and operate with a data-only network such as Mobitex or DataTAC, or a complex voice and data network such as a GSM/GPRS, CDMA, EDGE, UMTS or CDMA2000 network, via the antenna 48.

For data communication, signals are received, for example, an email message or downloaded Web page, at the communications device 46, processed and sent to the microprocessor 38 where the signals are further processed for display on the LCD display 24. Data, such as an email message can also be composed using one or more of the input devices such as the key pad 34 or the trackwheel 30. The data is sent through the communications device 46 to the network to which the portable electronic device 20 connects.

For voice communication, a received signal is processed by the communications device 46, through the microprocessor 38, and output to the speaker 26. Signals are generated at the microphone 36 for transmission using the communications device 46, over the voice network to which the portable electronic device 20 connects.

Although not shown, a battery provides power to all active elements of the portable electronic device 20.

The persistent storage device 42 also stores a plurality of applications executable by the microprocessor 38 that enable the portable electronic device 20 to perform certain operations including the communication operations referred to above. Other applications software is provided including, for example, an email application, a Web browser application, an address book application, calendar applications, a profiles application, and others.

It will be appreciated that email messages are received at the portable electronic device 20 by data communication referred to above. Each email message that is received includes a variety of information including a date of receipt, time of receipt and sender email information. Email messages are composed or viewed on the portable electronic device by selection of the email message application, causing execution of the email message application by the microprocessor 38.

The Web browser application permits locating and displaying of Web pages from the World Wide Web.

The address book application provides a graphical user interface for creating, viewing and managing address book data including contacts names, addresses, email addresses, telephone numbers, and other information when executed by the microprocessor 38.

It will also be appreciated that the calendar applications are used for displaying and storing time-dependent events such as appointments, lectures, exams, movies, meetings, performances, dinners, ceremonies, etc., when executed by the processor 36. Each calendared event includes a variety of information including a date and time of the event.

The profiles application is used for selection and customization of notification modes by user selection from a number of different notifications set for the occurrence of specific events. Each profile can be customized to give rise to different notification output for various applications on the portable electronic device 20.

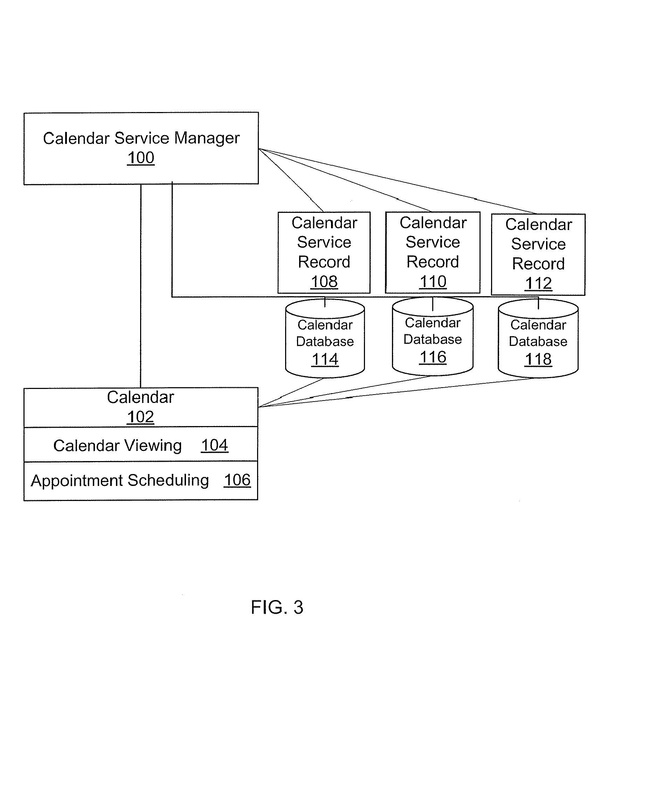

Referring now to Figure 3, the persistent storage device 42 includes the applications software referred to above and also includes a calendar service manager application 100. The calendar service manager application 100 begins on startup of the portable electronic device 20 and, in the present embodiment, runs in the background on the portable electronic device 20. The calendar service manager application 100 is responsible for receiving service record changes including additions, modifications and deletions, for maintaining and managing databases for storage of time-dependent events and for managing connections to different calendar services.

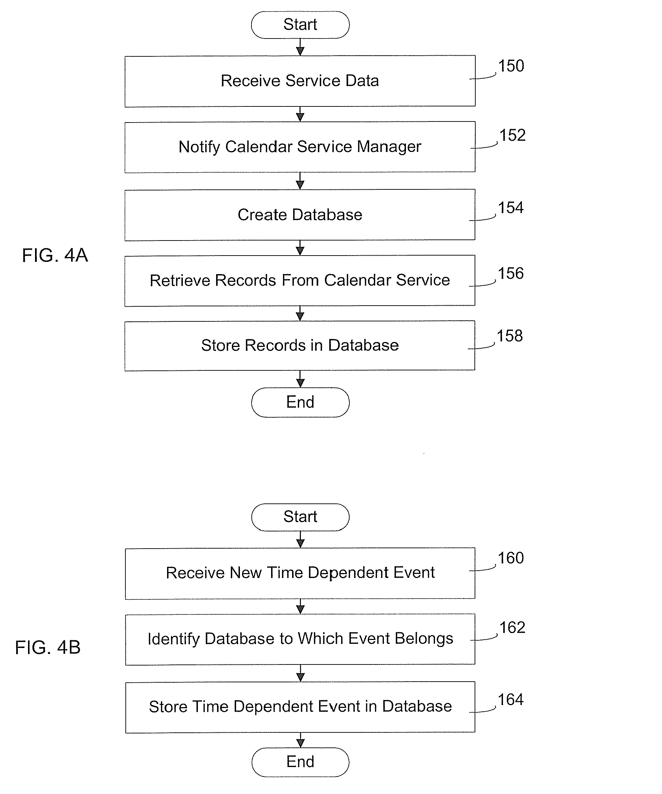

Referring now to Figure 4, there is shown a flowchart illustrating steps carried out at the portable electronic device 20 during the creation and management of a new database associated with a new calendar service. A calendar service record, such as the exemplary calendar service records 108, 110, 112 shown in Figure 3, is created any time a new calendar service is provisioned. The calendar service records are contained within service books (not depicted). In other words, when a new calendar service is added to enable viewing and storage of time-dependent events on the portable electronic device 20, a calendar service record is created. A data packet is received at the portable electronic device 20 including information about a service that is parsed to create the service record (step 150). The calendar service record includes information from the data packet such as a unique identifier or address of the calendar service with which it is associated (UID), thereby identifying the calendar service to which the time-dependent events belong, who the record is for (User ID), and the capabilities. The capabilities include information for data exchange with the calendar service such as, routing information, content types and synchronization capability (pull capability only or full synchronization capability). From the information in the calendar service record, a notification is sent to the calendar service manager application 100 in the form of an addition, update or removal. In the case of an addition of a calendar service, an addition notification is sent to the calendar service manager application (step 152) from the service book.

The calendar service manager application 100 acts as an intermediary or middle manager by managing the calendar services for the calendar application. The calendar service manager application 100 uses the information embedded in the notification from step 152 to create the database (step 154) and initiates retrieval of the time-dependent events from the calendar service based on the synchronization capabilities defined in the calendar service record (step 156). The time-dependent events are then stored in the appropriate database (step 158). Thus, the calendar service manager application 100 creates a new database, such as the exemplary databases 114, 116, 118 shown in Figure 3, when a new calendar service is added, for storage of time-dependent events from the new calendar service, in the form of Java-based objects for example. Throughout the present description, reference is made to time-dependent events. It will be appreciated that where time-dependent events are referred to in relation to an electronic calendar service, the time-dependent events are data representative of the time-dependent events, such as a Java-based object. The database is associated with the calendar service by the calendar service record and only time-dependent events that belong to that calendar service are stored in the associated database. Thus, for each calendar service, a calendar service record is created along with a database, referred to herein as a calendar database. The calendar service manager application 100 notifies the calendar application of the addition of a new service.

In the exemplary embodiment shown in Figure 3, three calendar service records (108, 110, 112) are shown and three associated calendar databases (114, 116, 118). Thus, the time-dependent events from three different calendar services are stored on the portable electronic device 20 for viewing by the user. It will be appreciated that three calendar service records 108, 110, 112 and three databases 114, 116, 118 are shown for exemplary purposes only, and the portable electronic device is not limited to three calendar services. A greater or lesser number of calendar services (and associated calendar service records and databases) can be used.

It will be appreciated that time-dependent events in the form of, for example, appointments can be added to the calendar databases 114, 116, 118 in different ways such as by synchronization with a calendar service from a desktop computer or with an online calendar service as referred to above with reference to steps 156 and 158 of Figure 4A, or, for example, by receipt of an email containing a meeting attachment. When the time-dependent events of a calendar service are added to the portable electronic device, the synchronization capability is defined in the calendar service record. For exemplary purposes, the time-dependent events of an online calendar service are added to the portable electronic device 20, and therefore the synchronization capability is defined. For the purpose of the present example, the online calendar service publishes a URL (step 150) permitting the user to pull the time-dependent events to the portable electronic device 20. The time-dependent events can only be pulled to the portable electronic device 20 and synchronization is not permitted by the online calendar service. Thus, this capability is defined in the calendar service record that is created at step 152, and a rule is set up in the calendar service record to pull time-dependent events from the calendar service (for example, on a daily basis). The online calendar service includes a UID and a User ID. The calendar service manager application 100 creates an associated database at step 154 and uses the rule to retrieve the time-dependent events by performing an HTTP GET request (step 156). The data is parsed upon receipt at the portable electronic device, and the parsed data is added to the database created for the time-dependent events from that calendar service (step 158).

As indicated above, time-dependent events can also be added by, for example, receipt of an email with an electronic meeting attachment. Referring to Figure 4B, a new time-dependent event is received at the portable electronic device 20 at step 160. The time-dependent event is determined by the calendar service manager application 100 to be associated with a calendar service for which a database exists on the portable electronic device 20, using information such as the User ID (step 162). The time-dependent event is then parsed and stored in the appropriate database at step 164. In one particular example, an online email service and a calendar service are set up and used for the portable electronic device 20 to receive email from and to store time-dependent events of. In this case, the User ID for both the email service and the calendar service are the same. When a meeting attachment is received at the device via email (step 160), the User ID is determined by the calendar service manager application 100 to be associated with a calendar service for which the portable electronic device 20 includes a database, such as database 116 (step 162). The meeting attachment is then parsed (at the parser) and is stored in the database 116 based on the User ID (step 164).

It will be appreciated that time-dependent events can also be added to any one of the databases in many other ways. For example, a time-dependent event can be added by user creation of the appointment using an appointment scheduling application as referred to below.

It will also be appreciated that when an appointment is modified on the device by editing one of the user-editable fields in the calendar application, the appointment record is stored in one of the calendar databases 114, 116, 118. The database 114, 116, 118 in which the appointment record is stored is associated with a calendar service by the appropriate one of the calendar service records 108, 110, 112. The portable electronic device 20 can then send an update to the associated calendar service to reflect the changes made to the appointment record by the user of the portable electronic device 20.

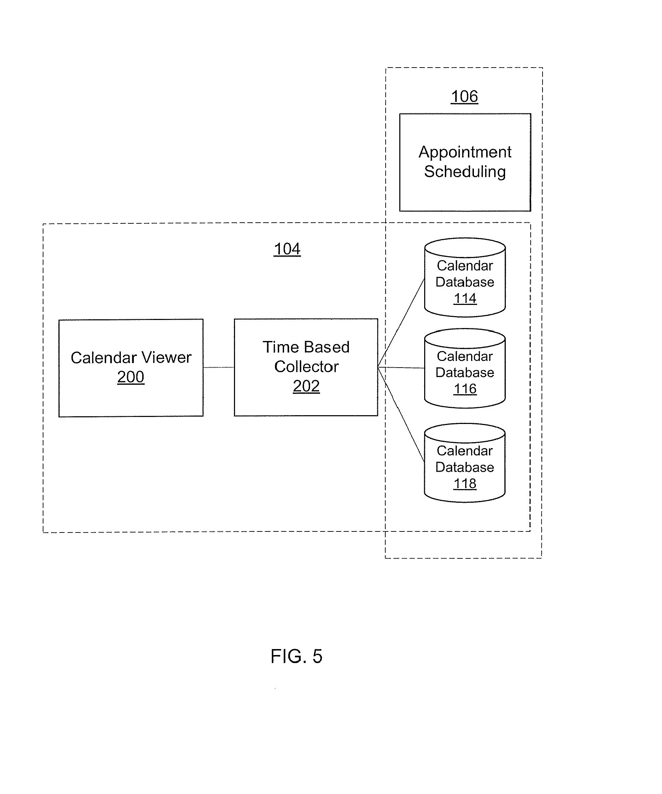

Based on the foregoing, it will be appreciated that time-dependent events from more than one calendar service can be managed and stored on the portable electronic device 20 in multiple databases, each database being dedicated to a respective calendar service. The display of time-dependent events from multiple databases will now be described with reference to Figure 5.

The calendar applications include both a calendar-viewing application 104 and an appointment-scheduling application 106. The calendar-viewing application 104 is responsible for displaying appointment information in any one of the calendar views, including day view, week view or month view, selectable by the user. The calendar-viewing application 104 is operable to display time-dependent event information based on time-dependent events stored in multiple calendar databases. In the present example, three calendar databases 114, 116, 118 exist (although the present application is not limited to three calendar databases and further databases can exist) for storing time-dependent events based on the calendar services to which the appointment belongs.

The appointment-scheduling application 106 is for creating and scheduling time-dependent events for display using the calendar viewing function. Time-dependent events that are scheduled are stored in one of the appointment databases, either a default database or a database selectable by the user.

Figure 5 is a schematic illustration of the relationship between the calendar viewing application 104 and the appointment scheduling application 106. As shown in Figure 5, the exemplary calendar databases 114, 116, 118 are functionally connected to both the calendar viewing application 104 and the appointment scheduling application 106 to facilitate the addition, deletion and modification of appointment data using the appointment scheduling application 106 and to facilitate the display of appointment data from different calendar databases in the same view.

Functional features of the calendar viewing application 104 include a calendar viewer 200 and a time-based collector 202. The calendar viewer 200 in the present embodiment is in the form of a software module that is responsible for displaying a graphical user interface (GUI) via the LCD display 24 for a user of the portable electronic device 20. The GUI provides different display options for user selection including the selection of different views, such as day view, week view, and month view. Other views are possible. The display options also permit user selection of the calendar database(s) for viewing, thereby allowing the user to select from the existing calendar databases for viewing, as will be explained further below.

The time-based collector 202 is also in the form of a software module in the present embodiment and is responsible for providing a list of time-dependent events to the calendar viewer 200 for display. The list is provided by the time-based collector 202 in response to a request from the calendar viewer 200 for time-dependent events in any or all of the calendar databases 114, 116, 118 that meet specified constraints. The constraints include, for example, a start time that falls within a specified range dependent on the calendar view selected for display and displayed using the calendar viewer 200. The time-dependent events included in the list include only those time-dependent events from the calendar databases 114, 116, 118 selected for viewing by the user. If, for example, the user selects all of the calendar databases 114, 116, 118 for display, all time-dependent events having a start time that falls within the specified range from all of the calendar databases 114, 116, 118 are displayed in a single display.

The appointment scheduling application 106 is also responsible for displaying a GUI via the LCD display 24 for a user of the portable electronic device 20. This GUI is specific for creating and scheduling time-dependent events and permits user creation, modification and deletion of time-dependent events including information by user entry into fields such as the start time, duration, location and time zone for an appointment. The appointment scheduling application 106 permits user selection of which one of the calendar databases 114, 116, 118 a new appointment is added to. Thus, the user can add to any one of the databases 114, 116, 118 by selecting the database for storage of a new appointment record during creation of the record.

The calendar viewer 200 is responsible for displaying a calendar GUI to LCD display 24 and updating the LCD display 24 in response to user interactions with the GUI such as setting a particular calendar view and selecting the calendar databases 114, 116, 118 to be included in the display. In order to display time-dependent events in a specific time period, the calendar viewer 200 receives a calendar-view selection by user input using, for example, the trackwheel, thereby indicating which of the calendar views the user wishes to have displayed on the LCD display 24. If no calendar view is selected by the user, a default calendar view is used. The calendar viewer 200 requests from the time-based collector 202 a list of time-dependent events that begin within the time periodtime-based. When received from the time-based collector 202, the calendar viewer 200 causes each appointment record to be rendered in the proper location within the displayed calendar view, based on the start time and duration of the appointment.

The time-based collector 202 is responsible for time-based collection of time-dependent events based on the request received from the calendar viewer 200. Thus, the time-based collector 202 returns a list of time-dependent events from all of the selected calendar databases 114, 116, 118 that fall within the constraints defined in the request. The list of time-dependent events is ordered and provided to the calendar viewer 200 for rendering. The time-based collector 202 also includes a cache for storage of recently collected lists.

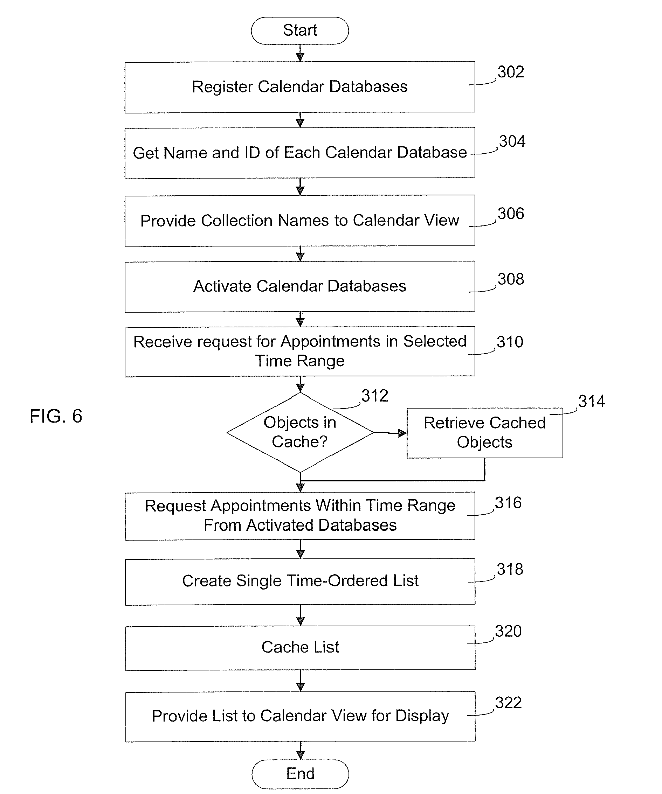

Reference is now made to Figure 6, which shows a flowchart illustrating steps carried out at the portable electronic device 20 during displaying of a calendar view according to one aspect of an embodiment. Coding of software for carrying out such steps is well within the scope of a person of ordinary skill in the art. At step 302, each of the calendar databases 114, 116, 118 is registered by the calendar service manager 100 shown in Figure 3, with the time-based collector 202 such that the calendar databases 114, 116, 118 are included in the display by the calendar viewer 200. Next, the time-based collector 202 obtains the name and identification (User ID) of each of the calendar databases 114, 116, 118 from the calendar service manager application 100 (which originally received the name from the calendar service record), to provide names associated with each database and thereby identify the database to the user, at step 304. These names are provided to the calendar viewer 200 and are displayed to the user on the LCD display 24 for user selection of which ones of the databases to display (step 306), if and when the user interacts with the GUI to select specific ones or all of the databases 114, 116, 118. The ones of the databases that are selected for display are then activated at step 308, either in response to user selection using the GUI or by a default selection if the user does not select or unselect any databases 114, 116, 118.

At step 310, the user interacts with the GUI presented by the calendar viewer 200 to select a calendar display view that the user wishes to have displayed on the LCD display 24 of the portable electronic device 20, thereby effectively requesting a display of all time-dependent events within a time range defined by the selected calendar display view. Alternatively, a default time range can be selected based on a default calendar display view. Based on the user interaction with the GUI or the default display on startup of the calendar viewing application, a request for time-dependent events within the time range is received at the time-based collector 202 from the calendar viewer 200.

At step 312, it is determined if any time-dependent events that meet the time range constraint and that are from the selected and therefore activated databases 114, 116, 118 are stored in the time-based collector cache. The cache is used for storing a list of time-dependent events recently provided to the calendar viewer 200 and aids in reducing overall response time for displaying time-dependent events when requested. The cache is limited in size and only maintains more recently stored lists of time-dependent events. If, for example, a user recently requested a display of time-dependent events falling within the time range, these time-dependent events are stored in the cache and are retrieved from the cache at step 314. If no such previous request was made, however, the cache does not include any such time-dependent events.

At step 316, the time-based collector retrieves all the time-dependent events from each of the calendar databases 114, 116, 118 that were previously activated by user selection or by a default selection for display and that meet the time range constraint, for example, by having a start time and/or an end time (determined by the start time and the duration) that falls within the defined time range. The time-dependent events that meet the time range constraint are added in a time-ordered list based on the start time of the appointment at step 318 by way of a merge and sort algorithm. In the present embodiment, the list is a list of pointers, indexing the record in the calendar database 114, 116, or 118 to which it belongs. The list is added to the cache at step 320 and is provided to the calendar viewer 200 and displayed on the LCD display 24 at step 322.

The calendar viewer 200 uses information regarding the selected calendar view, including the time range to be displayed as well as the granularity of the time slots within that displayed screen, along with the information from each of the time-dependent events that were included in the list, such as the start time and duration, to determine where to render the appointment in the view.

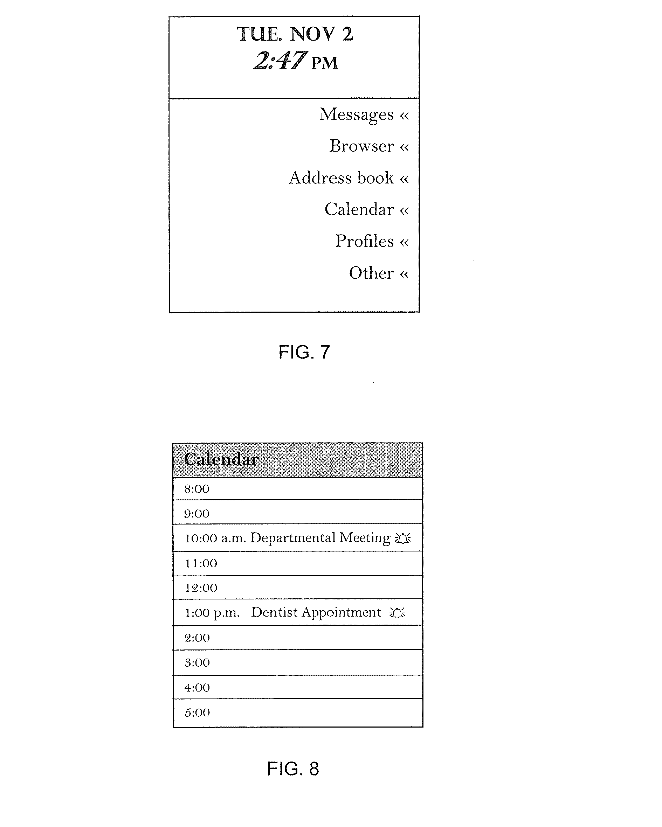

Reference is now made to Figure 7 which shows an exemplary menu screen that is displayed on the LCD display 24 of the electronic device 20 (the remainder of the electronic device 20 is not shown in Figure 7). The exemplary menu screen includes a display clock that is updated according to the internal clock 44**.** As indicated above, the electronic device 20 is operable to execute various applications stored in the persistent storage device 42. In the exemplary screen of Figure 7, these applications include, for example, Messages, a Web browser, an Address book, a Calendar, Profiles, and others. An input device such as the trackwheel 30 can be used for scrolling through the applications and for selecting a desired application by pressing inwardly, along the path of arrow "A", on the trackwheel 30. The exit key 32 is used for exiting any application by pressing inwardly along the path of arrow "A".

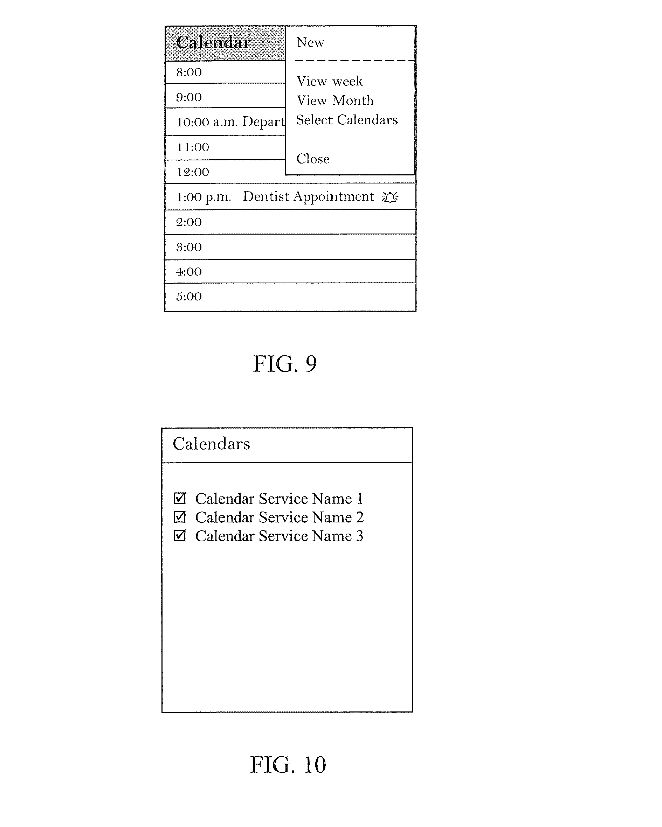

Selection of the Calendar application on the LCD display 24 causes the microprocessor 38 to execute the calendar viewing application 104, providing the calendar viewer GUI via the LCD display 24 for the user of the portable electronic device 20, as shown in Figure 8. In the present embodiment, the LCD display 24 shows a default day view upon startup. As referred to above, the display can be selectively manipulated and displayed in various views including monthly, weekly or daily. The trackwheel 30 is pressed inwardly in the direction of arrow "A" to cause a submenu to be displayed on the LCD display 24 for selection of different calendar views, as shown in Figure 9.

The submenu in Figure 9 includes different options for user selection, including, for example, New, View Week, View Month, Select Calendars and Close. Selection of the New option causes execution of the appointment scheduling application 106, thereby providing the appointment scheduling GUI to the user, for composition of a new appointment record. Selection of the View Week option results in the display of the weekly schedule for the week including the day displayed in Figure 8. Selection of the View Month option results in the display of the monthly schedule for the month including the day displayed in Figure 8. It will be appreciated that when in the week view, the calendar view options provided are View Month and View Day. Similarly, when in the month view, the calendar view options provided are View Week and View Month. Selection of the Select Calendars option results in the display of a list of the databases, selectable by the user and identified by the name provided to the calendar viewer 200 at step 306 described above with reference to Figure 6. Selection of the Close option closes the Calendar application.

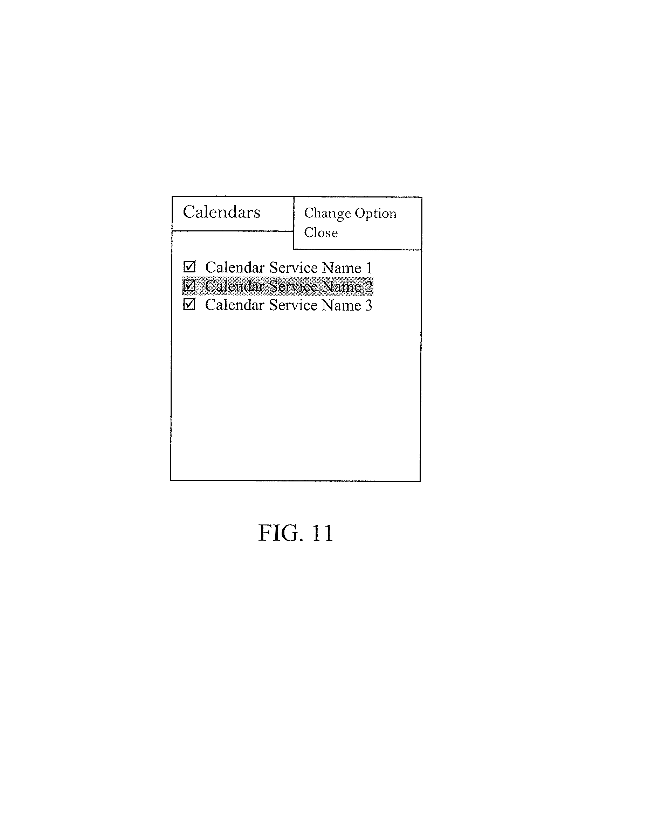

Selection of the Select Calendars option results in the display of the screen shown in Figure 10, which shows the list of databases, corresponding to calendar services available on the portable electronic device and selectable by user selection of the checkbox next to the name identifying the database. The ones of the databases that are selected for display are activated at step 308 described above and are therefore displayed in the calendar view. The ones of the databases that are not selected for display are not activated at step 308 and are therefore not displayed in the calendar view. The databases can be selected or unselected by scrolling down to the checkbox next to the database that the user wishes to select (if the checkbox is not selected) or unselect (if the checkbox is selected) rotating the trackwheel 30 and then pressing inwardly on the trackwheel 30 in the direction of arrow "A". The user is then presented with the submenu shown in Figure 11 which provides the user with the option to "Change Option" or close. Selection the change option causes the checkbox to change to selected (if it was previously not selected) or to not selected (if it was previously selected).

While the embodiments described herein are directed to particular implementations of the system and method for storage and display of time-dependent events. It will be understood that modifications and variations to these embodiments are within the scope and sphere of the present application. For example, many of the options provided in the submenus and the displayed details in the screens shown in the Figures are provided for exemplary purposes and such options and details can vary. Further, in the screen shown in Figure 8, time-dependent events are displayed in the day calendar view. Each time-dependent event displayed can show an icon, for example, or other distinguishing feature to represent the calendar service that the time-dependent event belongs, thereby providing a visual indication of the calendar services to which each time-dependent event belongs. Alternatively, time-dependent event can be shown in a different colour or can be highlighted in a different colour depending on the calendar service that the time-dependent event belongs to.

Many other modifications and variations may occur to those skilled in the art. All such modifications and variations are believed to be within the sphere and scope of the present application.

## Claims

1. A method of storing time-dependent events at an electronic device, comprising:
maintaining a plurality of calendar databases for saving data relating to respective calendar services;
receiving time-dependent event data associated with one of the calendar services; and
storing said time-dependent event data in one of said calendar databases for storage of data associated with said one of the calendar services.

2. The method according to claim 1, comprising maintaining a plurality of calendar service records, each calendar service record corresponding to a respective one of the calendar services.

3. The method according to claim 1 or claim 2, comprising:
creating a new calendar database when a new calendar service is provisioned, said new calendar database for saving data relating to said new calendar service.

4. The method according to claim 2 or claim 3, comprising creating a new calendar service record when said new calendar service is provisioned.

5. The method according to claim 2 or claim 4, wherein each of said calendar service records comprises a unique identifier of the calendar service, with which the calendar service record corresponds, and a user identification.

6. The method according to claim 5, wherein each of said calendar service records comprises a capability to synchronize the calendar service to which the calendar service record corresponds.

7. The method according to any one of the preceding claims, comprising providing a graphical user interface for user selection of ones of said calendar databases for display in a calendar display view.

8. The method according to any one of the preceding claims, comprising:
receiving a set of constraints for selecting time-dependent data;
collecting, from each of said calendar databases, the time-dependent event data that meets the set of constraints; and
displaying the time-dependent event data that meets the set of constraints in a calendar display view.

9. The method according to any one of claims 1 to 7, comprising:
receiving a user input indicating selected ones of said plurality of calendar databases for display;
receiving a set of constraints for selecting time-dependent data;
collecting, from only said selected ones of said plurality of calendar databases, the time-dependent event data that meets the set of constraints; and
displaying, in a calendar display view, the time-dependent event data that meets the set of constraints.

10. The method according to claim 8 or claim 9, wherein collecting comprises creating an ordered list of the time-dependent event data that meets the set of constraints.

11. The method according to claim 8 or claim 9, wherein said set of constraints comprises a time range within which time-dependent events at least start or end.

12. The method according to any one of claims 8 to 10, wherein said time-dependent event data that meets the set of constraints is visually distinguishable in said display view based on the calendar service to which said time-dependent event data relates.

13. The method according to claim 6, comprising:
receiving modified time-dependent event data from a user input;
storing said modified time-dependent event data in the one of the calendar databases with which the modified time-dependent event data is associated; and
if said capabilities permit, providing an update to said calendar service for updating with said modified time-dependent event data.

14. The method according to claim 6, comprising:
receiving new time-dependent event data from a user input;
storing said new time-dependent event data in a user-selected one of said databases; and
if said capabilities permit, providing an update to said calendar service for updating with said new time-dependent event data.

15. An electronic device comprising:
a memory for storage of a plurality of calendar databases associated with respective calendar services;
a display device for displaying a calendar display view;
a user input device for receiving user input;
a communications device and antenna for receiving time-dependent event data associated with one of said calendar services; and
a processor connected to the memory, the user input device, the display device, and the communications device, for executing program store stored in the memory to cause the electronic device to perform the method according to any one of claims 1 to 14.

16. A computer program product for managing time-dependent events at an electronic device, said computer program product comprising a computer-readable medium having computer-readable code embodied therein for implementing in said electronic device, the method according to any one of claims 1 to 14.
